# EUROPEAN PATENT SPECIFICATION

(11) **EP 4 066 722 B1**
(45) Date of publication and mention of the grant of the patent: **06.09.2023**
(21) Application number: 22158713.2
(22) Date of filing: 25.02.2022
(51) Int. Cl.: A47L 15/42, A47L 15/48

(54) **A DISHWASHER PROVIDING HEAT RECOVERY**
GESCHIRRSPÜLMASCHINE MIT WÄRMERÜCKGEWINNUNG
LAVE-VAISSELLE PERMETTANT LA RÉCUPÉRATION DE LA CHALEUR

(30) Priority: 02.04.2021 TR 202105994
(43) Date of publication of application: 05.10.2022
(73) Proprietor: Arçelik Anonim Sirketi, 34445 Istanbul (TR)
(72) Inventor: POYRAZ, Onur, 34445 Istanbul (TR); MORDOGAN, Umut, 34445 Istanbul (TR); BALIKCI, Ilhan, 34445 Istanbul (TR)

(56) References cited:
- EP-A1- 3 788 934
- EP-A2- 1 690 489
- EP-A2- 2 687 142
- US-A1- 2020 163 526

## Description

The present invention relates to a dishwasher providing heat recovery.

In dishwashers, the dishes are placed onto the racks provided in the washing tub. The cleaning process is performed by delivering water onto the racks by means of the spraying member. In certain programs, the water is heated before being delivered onto the dishes. Thus, a more effective cleaning is performed. In some dishwashers, the water taken from the mains is collected in a water pocket. The water pocket is disposed between the body and the washing tub. Heat exchange occurs between the water pocket and the washing tub. Thus, the water in the water pocket is heated a little. Energy is saved by heating the water before taking into the washing tub. In the state of the art, there are dishwashers wherein the dirty and hot water leaving the washing tub is used to heat the water in the water pocket by means of a line provided on the water pocket. The hot and dirty water used in the washing process flows through a line provided on the water pocket such that heat exchange occurs between the cold water in the water pocket and the hot and dirty water. Thus, heat recovery is provided. However, while the heat recovery process continues, the total cycle duration of the dishwasher increases. Therefore, the heat recovery process must be performed as quickly as possible. In order to increase the speed, the performance of the heat recovery process must be increased as well. Moreover, the temperature of the water discharged from the dishwasher after the heat recovery process remains higher than the desired washing water temperature. Discharging the heated water causes energy loss.

In the state of the art Patent Application No. DE102010029873, a dishwasher is disclosed, wherein the waste water is collected and heated.

In the state of the art Patent Application No. US2020163526, a dishwasher is disclosed, that heats washing water using a heat pump.

The aim of the present invention is the realization of a dishwasher wherein saving in energy and time is provided.

The dishwasher realized in order to attain the aim of the present invention, explicated in the first claim and the respective claims thereof, comprises a body; a washing tub which is disposed in the body; a sump which is disposed on the base of the washing tub; at least one spraying member which sprays the water coming from the sump into the washing tub; at least one circulation pump which enables the water to be transferred from the sump to the spraying member; a heater which is disposed on the circulation pump; a multiport valve which is disposed between the circulation pump and the spraying member; a first water pocket which is disposed between the washing tub and the body; and a first heat exchanger which is connected to the sump at one end and to the multiport valve at the other end, and which extends into the first water pocket. The water passing through the circulation pump is heated by means of the heater and then delivered to the spraying member. The water is sprayed onto the dishes by means of the spraying members. The spraying member which receives the water is determined by means of the multiport valve. The first water pocket is filled with water from the mains. By means of the first heat exchanger connected to the sump at one end, the water used in the washing process is passed over the hot first water pocket and the water is heated by waste water.

The dishwasher of the present invention comprises a heat recovery system which is disposed between the washing tub and the body and which has a second water pocket and a second heat exchanger. The water passing over the second heat exchanger is used in the washing process without being kept waiting. The waste hot water leaving the first heat exchanger is delivered to the second water pocket such that the washing water is instantaneously heated with the waste hot water.

In an embodiment of the present invention, the dishwasher comprises the heat recovery system having the second water pocket which receives the hot water passing through the first heat exchanger, and the second heat exchanger through which the cold water to be used in the washing process passes. The water which passes through the first heat exchanger to heat the first water pocket and which remains hot passes through the multiport valve to be delivered to the second water pocket. The cold water to be used in the washing process passes through the second heat exchanger which is connected to the sump at one end and to the multiport valve at the other end. The second heat exchanger is disposed on the second water pocket. Thus, after being instantaneously heated, the washing water is delivered to the spraying members via the multiport valve.

In an embodiment not falling within the scope of the present invention, the dishwasher comprises the heat recovery system having the second water pocket wherein the cold water to be used in the washing process is stored, and the second heat exchanger which carries the hot water received from the first heat exchanger to deliver the same to the sump. The second water pocket is completely filled with the cold water to be used in the washing process. The water which leaves the first heat exchanger and remains hot is delivered to the second heat exchanger, and since the second heat exchanger is disposed on the second water pocket, the washing water is enabled to be heated by means of the waste hot water.

In an embodiment of the present invention, the dishwasher comprises a drying duct which is disposed on the second water pocket, and the second heat exchanger which is arranged around the drying duct. The drying duct has two ends opening into the washing tub and a fan disposed between the two ends. The temperature in the drying duct is decreased thanks to the temperature difference between the water flows passing through the second water pocket and the second heat exchanger such that the drying air is dehumidified. Thereby, the drying performance is increased.

In an embodiment not covered by the present invention, the dishwasher comprises the second water pocket having at least two partitions thereon one of which is filled with waste hot water and other with the washing water. The partition containing the waste hot water is used as the second heat exchanger and provides the heating of the washing water.

By means of the present invention, a dishwasher is realized, comprising a heat recovery system wherein the waste hot water is used for more than one purpose and the washing water is instantaneously heated, thus providing savings in time and energy.

A dishwasher realized in order to attain the aim of the present invention is illustrated in the attached figures, where:

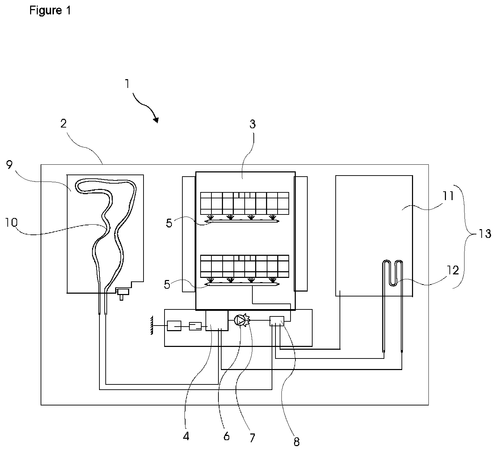

Figure 1 - is the schematic view of the dishwasher.

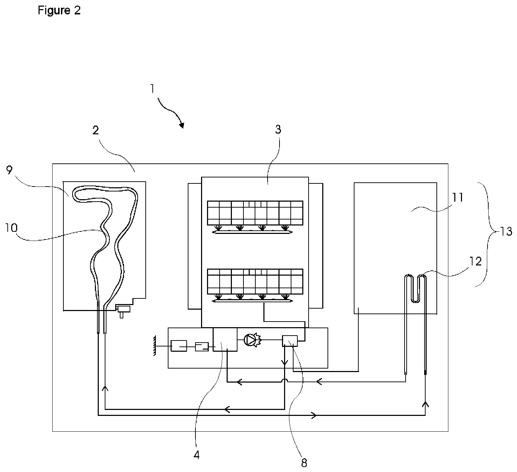

Figure 2 - is the schematic view of the heat recovery system on the dishwasher.

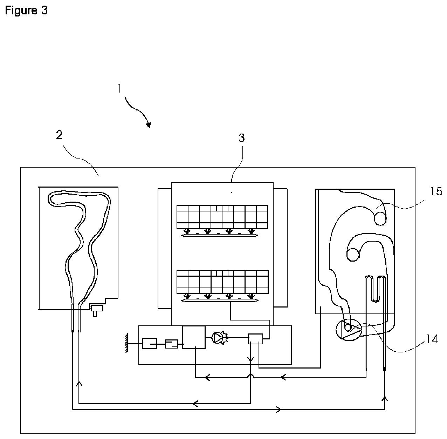

Figure 3 - is the schematic view of the drying duct and the heat recovery system on the dishwasher.

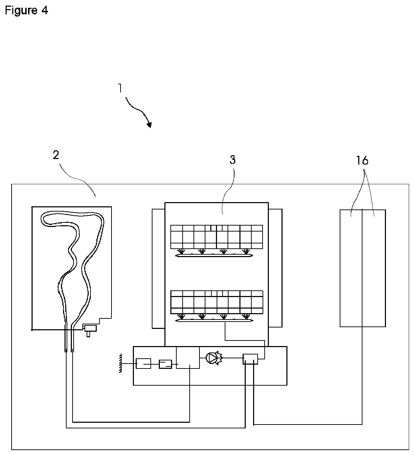

Figure 4 - is the schematic view of the partition and the heat recovery system on the dishwasher.

The elements illustrated in the figures are numbered as follows:
1- Dishwasher
2- Body
3- Washing tub
4- Sump
5- Spraying member
6- Circulation pump
7- Heater
8- Multiport valve
9- First water pocket
10- First heat exchanger
11- Second water pocket
12- Second heat exchanger
13- Heat recovery system
14- Fan
15- Drying duct
16- Partition

The dishwasher (1) comprises a body (2); a washing tub (3) which is disposed in the body (2) and wherein the washing process is performed; a sump (4) which is disposed on the base of the washing tub (3) and wherein the water coming from the washing tub (3) is collected; at least one spraying member (5) which is disposed in the washing tub (3) and which sprays the water coming from the sump (4) onto the kitchen items; a circulation pump (6) which enables the water to be transferred from the sump (4) to the spraying member (5); a heater (7) which is disposed on the circulation pump (6); a multiport valve (8) which is disposed between the circulation pump (6) and the spraying member (5) and which directs the water to the spraying member (5); a first water pocket (9) which is disposed between the washing tub (3) and the body (2) and wherein water is collected to be used in the washing process; and a first heat exchanger (10) which is connected to the sump (4) at one end and to the multiport valve (8) at the other end and which extends into the first water pocket (9). The dishes are placed into the washing tub (3) to be washed. The water taken from the mains is delivered to the sump (4), then passes through the circulation pump (6) to be heated by the heater (7) and then delivered to the multiport valve (8). By means of the multiport valve (8), the water is delivered to the desired spraying member (5). The water is taken from the mains into the first water pocket (9) and kept therein to be used in the washing process. The hot water which is used in the washing process and discharged from the washing tub (3) is delivered to the first heat exchanger (10). By means of the first heat exchanger (10), the water in the first water pocket (9) is heated. Thus, when the water is taken into the washing tub (3) for the washing process, saving is provided in time and energy.

The dishwasher (1) of the present invention comprises a heat recovery system (13) which is disposed between the washing tub (3) and the body (2), which has a second water pocket (11) and a second heat exchanger (12) and which enables the water used in the washing process to be heated without interrupting the process. By means of the water which leaves the first heat exchanger (10) and which is still hotter than the washing water thanks to the second water pocket (11) and the second heat exchanger (12), the water taken into the washing tub (3) is instantaneously heated. The waste hot water leaving the first heat exchanger (10) is delivered to the second water pocket (11) such that the washing water is instantaneously heated with the waste hot water. Thus, the discharge of the hot water is prevented and the washing water is heated with the waste hot water before entering the washing tub (3). Thus, savings both in time and energy are provided.

In an embodiment of the present invention, the dishwasher (1) comprises the heat recovery system (13) having the second water pocket (11) to which the hot water passing through the first heat exchanger (10) is delivered by means of the multiport valve (8), and the second heat exchanger (12) which is connected to the sump (4) at one end and to the multiport valve (8) at the other end, which extends into the second water pocket (11) and which carries the cold water to be used in the washing process. The hot water leaving the first heat exchanger (10) passes through the multiport valve (8) to be delivered to the second water pocket (11). One end of the second heat exchanger (12) is connected to the sump (4) while the other end thereof is connected to the multiport valve (8). Thus, the cold water taken from the sump (4) is delivered to the washing tub (3). By means of the second heat exchanger (12) passing through the second water pocket (11), the cold water delivered to the washing tub (3) is heated with the waste hot water. Consequently, saving in energy and time is provided.

In an embodiment not falling within the scope the present invention, the dishwasher (1) comprises the heat recovery system (13) having the second water pocket (11) wherein the cold water delivered to the spraying arms by means of the multiport valve (8) is stored, and the second heat exchanger (12) which is connected to the first heat exchanger (10) at one end and to the sump (4) at the other end, and which carries the hot water taken from the first heat exchanger (10). The cold water to be delivered to the spraying arms is stored in the second water pocket (11). The second water pocket (11) is directly connected to the multiport valve (8). The hot water leaving the first heat exchanger (10) is carried to the second heat exchanger (12). Thus, the hot water in the second water pocket (11) is heated by means of the second heat exchanger (12) just before the washing process.

In an embodiment of the present invention, the dishwasher (1) comprises the second heat exchanger (12) which is larger than the first heat exchanger (10). Thus, a more efficient heat exchanger is realized on the second water pocket (11).

In an embodiment of the present invention, the dishwasher (1) comprises the second heat exchanger (12) which has more bends than the first heat exchanger (10). Thus, the heat exchange between the second water pocket (11) and the second heat exchanger (12) increases.

In an embodiment of the present invention, the dishwasher (1) comprises a drying duct (15) which is disposed on the second water pocket (11) and which has two ends opening into the washing tub (3) and a fan (14) disposed between the two ends, and the second heat exchanger (12) which is arranged around the drying duct (15). By means of the drying duct (15), the drying process is realized. The water vapor in the washing tub (3) is sucked by means of the fan (14). The temperature in the drying duct (15) is decreased thanks to the temperature difference between the water flows passing through the second water pocket (11) and the second heat exchanger (12) such that the drying air is dehumidified. Thereby, the drying performance is increased.

In an embodiment not falling within the scope the present invention, the dishwasher (1) comprises the heat recovery system (13) having the second water pocket (11) with at least two partitions (16) thereon and a partition (16) which is provided on the second water pocket (11), to which the hot water is delivered by means of the multiport valve (8) and which is used as the second heat exchanger (12). The waste hot water is delivered to a partition (16). The two partitions (16) almost contact each other. Thus, the clean cold water to be used in the washing process is heated with the waste hot water. Since the partitions (16) almost contact each other, the heat exchange occurs more quickly and efficiently.

By means of the present invention, a dishwasher (1) is realized, wherein the waste hot water is used in heat recovery for more than once. By instantaneously heating the washing water before being taken into the washing tub (3), saving in time and energy is provided.

## Claims

1. A dishwasher (1) **comprising** a body (2); a washing tub (3) which is disposed in the body (2) and wherein the washing process is performed; a sump (4) which is disposed on the base of the washing tub (3) and wherein the water coming from the washing tub (3) is collected; at least one spraying member (5) which is disposed in the washing tub (3) and which sprays the water coming from the sump (4) onto the kitchen items; a circulation pump (6) which enables the water to be transferred from the sump (4) to the spraying member (5); a heater (7) which is disposed on the circulation pump (6); a multiport valve (8) which is disposed between the circulation pump (6) and the spraying member (5) and which directs the water to the spraying member (5); a first water pocket (9) which is disposed between the washing tub (3) and the body (2) and wherein water is collected to be used in the washing process; and a first heat exchanger (10) which is connected to the sump (4) at one end and to the multiport valve (8) at the other end and which extends into the first water pocket (9), a heat recovery system (13) which is disposed between the washing tub (3) and the body (2), which has a second water pocket (11) and a second heat exchanger (12) and which enables the water used in the washing process to be heated without interrupting the process, the waste hot water leaving the first heat exchanger (10) is delivered to the second water pocket (11) such that the washing water is instantaneously heated with the waste hot water **characterized by** the heat recovery system (13) having the second water pocket (11) to which the hot water passing through the first heat exchanger (10) is delivered by means of the multiport valve (8), and the second heat exchanger (12) which is connected to the sump (4) at one end and to the multiport valve (8) at the other end, which extends into the second water pocket (11) and which carries the cold water to be used in the washing process.

2. A dishwasher (1) as in Claim 1, **characterized by** the second heat exchanger (12) which is larger than the first heat exchanger (10).

3. A dishwasher (1) as in Claim 1 and Claim 2, **characterized by** the second heat exchanger (12) which has more bends than the first heat exchanger (10).

4. A dishwasher (1) as in any one of the above claims, **characterized by** a drying duct (15) which is disposed on the second water pocket (11) and which has two ends opening into the washing tub (3) and a fan (14) disposed between the two ends, and the second heat exchanger (12) which is arranged around the drying duct (15).

## Patentansprüche

1. Eine Geschirrspülmaschine (1) **umfasst** einen Körper (2); eine Waschwanne (3), die im Körper (2) angeordnet ist und in der der Waschvorgang durchgeführt wird; einen Korb (4), der am Boden der Waschwanne (3) angeordnet ist und in dem das aus der Waschwanne (3) kommende Wasser gesammelt wird; mindestens ein Sprühelement (5), das in der Waschwanne (3) angeordnet ist und das aus dem Korb (4) kommende Wasser auf das Geschirr sprüht; eine Umwälzpumpe (6), die die Übertragung des Wassers vom Korb (4) zum Sprühelement (5) ermöglicht; einen Heizer (7), die an der Umwälzpumpe (6) angeordnet ist; ein Mehrwegeventil (8), das zwischen der Umwälzpumpe (6) und dem Sprühelement (5) angeordnet ist und das Wasser zum Sprühelement (5) leitet; eine erste Wassertasche (9), die zwischen der Waschwanne (3) und dem Körper (2) angeordnet ist und in der Wasser gesammelt wird, um es im Waschvorgang zu verwenden; und einen ersten Wärmetauscher (10), der an einem Ende mit dem Korb (4) und am anderen Ende mit dem Mehrwegeventil (8) verbunden ist und der sich in die erste Wassertasche (9) erstreckt, ein Wärmerückgewinnungssystem (13), das zwischen der Waschwanne (3) und dem Körper (2) angeordnet ist, das eine zweite Wassertasche (11) und einen zweiten Wärmetauscher (12) aufweist und das eine Erwärmung des im Waschprozess verwendeten Wassers ohne Prozessunterbrechung ermöglicht, wobei das heiße Abwasser, das den ersten Wärmetauscher (10) verlässt, der zweiten Wassertasche (11) zugeführt wird, so dass das Waschwasser sofort mit dem heißen Abwasser erhitzt wird, **gekennzeichnet ist es dadurch,** dass das Wärmerückgewinnungssystem (13) die zweite Wassertasche (11) aufweist, der das durch den ersten Wärmetauscher (10) strömende Warmwasser mittels des Mehrwegeventils (8) zugeführt wird, und dass der zweite Wärmetauscher (12) an einem Ende mit dem Korb (4) und am anderen Ende mit dem Mehrwegeventil (8) verbunden ist, sich in die zweite Wassertasche (11) erstreckt und das kalte Wasser führt, das beim Waschen verwendet wird.

2. Eine Geschirrspülmaschine (1), wie in Anspruch 1 aufgeführt, **ist dadurch gekennzeichnet, dass** der zweite Wärmetauscher (12) größer als der erste Wärmetauscher (10) ist.

3. Eine Geschirrspülmaschine (1), wie in Anspruch 1 und 2 aufgeführt, **ist dadurch gekennzeichnet, dass** der zweite Wärmetauscher (12) mehr Biegungen aufweist als der erste Wärmetauscher (10).

4. Eine Geschirrspülmaschine (1), wie in einem der vorherigen Ansprüchen aufgeführt, **ist dadurch gekennzeichnet, dass** ein Trocknungskanal (15), der an der zweiten Wassertasche (11) angeordnet ist und dessen zwei Enden in die Waschwanne (3) münden, und einen Ventilator (14), der zwischen den beiden Enden und dem zweiten Wärmetauscher (12) angeordnet ist, der um den Trocknungskanal (15) herum angeordnet ist.

## Revendications

1. Un lave-vaisselle (1) **comprenant** un corps (2) ; une baignoire (3) disposée dans le corps (2) et dans laquelle le processus de lavage est effectué ; un puisard (4) disposé sur la base de la baignoire (3) et dans lequel l'eau provenant de la baignoire (3) est recueillie ; au moins un élément de pulvérisation (5) disposé dans la baignoire (3) et qui pulvérise l'eau provenant du puisard (4) sur les articles de cuisine ; une pompe de circulation (6) qui permet à l'eau d'être transférée du puisard (4) à l'élément de pulvérisation (5) ; un chauffage (7) qui est disposé sur la pompe de circulation (6) ; une vanne multivoies (8) qui est disposée entre la pompe de circulation (6) et l'élément de pulvérisation (5) et qui dirige l'eau vers l'élément de pulvérisation (5) un réchauffeur (7) placé sur la pompe de circulation (6) ; une vanne multivoies (8) placée entre la pompe de circulation (6) et l'élément de pulvérisation (5) et qui dirige l'eau vers l'élément de pulvérisation (5) ; une première poche d'eau (9) placée entre la baignoire (3) et le corps (2) et dans laquelle l'eau est recueillie pour être utilisée dans le processus de lavage ; et un premier échangeur de chaleur (10) relié au puisard (4) à une extrémité et à la vanne multivoies (8) à l'autre extrémité et qui s'étend dans la première poche d'eau (9), un récupérateur de chaleur et un échangeur de chaleur ; et un premier échangeur de chaleur (10) qui est relié au puisard (4) à une extrémité et à la vanne multivoies (8) à l'autre extrémité et qui s'étend dans la première poche d'eau (9), un système de récupération de chaleur (13) qui est disposé entre la baignoire (3) et le corps (2), qui comporte une deuxième poche d'eau (11) et un deuxième échangeur de chaleur (12) et qui permet de chauffer l'eau utilisée dans le processus de lavage sans interrompre le processus, l'eau chaude usée quittant le premier échangeur de chaleur (10) est acheminée vers le second réservoir d'eau (11) de sorte que l'eau de lavage est chauffée instantanément avec l'eau chaude usée **caractérisée par** le système de récupération de chaleur (13) comportant le second réservoir d'eau (11) dans lequel l'eau chaude traversant le premier échangeur de chaleur (10) est acheminée au moyen de la vanne multivoies (8), et le deuxième échangeur de chaleur (12) qui est relié au puisard (4) à une extrémité et à la vanne multivoies (8) à l'autre extrémité, qui s'étend dans la deuxième poche d'eau (11) et qui transporte l'eau froide à utiliser dans le processus de lavage.

2. Un lave-vaisselle (1) selon la déclaration 1, **caractérisé par** le deuxième échangeur de chaleur (12) qui est plus grand que le premier échangeur de chaleur (10).

3. Un lave-vaisselle (1) selon la déclaration 1 et la déclaration 2, **caractérisé par** le deuxième échangeur de chaleur (12) qui présente plus de coudes que le premier échangeur de chaleur (10).

4. Un lave-vaisselle (1) selon l'une quelconque des déclarations précédentes, **caractérisé par** un conduit de séchage (15) qui est disposé sur la deuxième poche à eau (11) et qui a deux extrémités débouchant dans la baignoire (3) et un ventilateur (14) disposé entre les deux extrémités, et le deuxième échangeur de chaleur (12) qui est disposé autour du conduit de séchage (15).
